# EUROPÄISCHE PATENTANMELDUNG

(11) **EP 2 622 996 A1**
(43) Veröffentlichungstag der Anmeldung: **07.08.2013**
(21) Anmeldenummer: 13153601.3
(22) Anmeldetag: 01.02.2013
(51) Int. Cl.: A47J 27/05

(54) **Verfahren zum Zubereiten von Speisen in einem Gargefäß sowie Zusammenfassung von einem Gargefäß mit einem Obergefäß**

(30) Priorität: 06.02.2012 DE 102012100940
(71) Anmelder: Vorwerk & Co. Interholding GmbH, 42275 Wuppertal (DE)
(72) Erfinder: Meggle, Martin, 33442 Herzebrock (DE); Hüsig, Matthias, 40878 Ratingen (DE)
(74) Vertreter: Müller, Enno

(57) **Zusammenfassung**

Die Erfindung betrifft zunächst Verfahren zum Zubereiten von Speisen in einem Gargefäß (3), auf dem ein gesondertes Obergefäß (14) vorgesehen ist, wobei das Obergefäß (14) nach unten durch einen bevorzugt dampfdurchlässigen, eine Trennwand (15) ausbildenden Gargut-Auflageboden (16) begrenzt ist. Um ein Verfahren der in Rede stehenden Art weiter zu verbessern, wird vorgeschlagen, dass zur Beeinflussung eines Garvorganges in dem Obergefäß (14) der Dampfdurchlass (11) unterschiedlich eingestellt wird. Außerdem betrifft die Erfindung eine Zusammenfassung von einem Gargefäß (3) mit einem Obergefäß (14), wobei das Gargefäß (3) und das Obergefäß (14) durch eine dampfdurchlässige Trennwand (15) voneinander gesondert sind. Um eine Zusammenfassung der in Rede stehenden Art insbesondere hinsichtlich des Garprozesses im Obergefäß weiter zu verbessern, wird vorgeschlagen, dass der Dampfdurchlass (11) einstellbar ist.

## Beschreibung

Die Erfindung betrifft zunächst ein Verfahren zum Zubereiten von Speisen in einem Gargefäß, auf dem ein gesondertes Obergefäß vorgesehen ist, wobei das Obergefäß nach unten durch einen bevorzugt dampfdurchlässigen, ein<e Trennwand ausbildenden Gargut-Auflageboden begrenzt ist.

Verfahren der in Rede stehenden Art sind bekannt, so beispielsweise aus der DE 44 14 823 A1. In dieser Patentanmeldung ist ein Verfahren zum Garen von Speisen beschrieben unter Nutzung eines, einer elektrischen Küchenmaschine zuordbaren Gargefäßes, welches insbesondere im Bodenbereich aufheizbar ist. Bevorzugt ist das Gargefäß deckelverschlossen. Auf diesem Deckel ist ein Obergefäß aufsetzbar, zur Aufnahme des Dampf-zu-garenden Gargutes. Der Dampf wird hierbei bevorzugt innerhalb des Gargefäßes erzeugt und durchtritt ggf. eine Durchtrittsöffnung des Gargefäß-Deckels durchsetzend durch den dampfdurchlässigen Gargut-Auflageboden in das Obergefäß zur dampfenden Umspülung des hierin befindlichen Gargutes.

Im Hinblick auf den vorbeschriebenen Stand der Technik wird eine technische Problematik der Erfindung darin gesehen, ein Verfahren der in Rede stehenden Art weiter zu verbessern.

Eine mögliche Lösung der Aufgabe ist nach einem ersten Erfindungsgedanken bei einem Verfahren gegeben, bei welchem darauf abgestellt ist, dass zur Beeinflussung eines Garvorganges in dem Obergefäß der Dampfdurchlass unterschiedlich eingestellt wird, so insbesondere zufolge entsprechender Einstellung der freien Durchtritts-Öffnungsfläche für den Dampf. In vorteilhafter Weise ist hierdurch die in das Obergefäß eintretende Dampfmenge pro Zeiteinheit einstellbar, dies bei bevorzugt gleichbleibender Menge an in dem Gargefäß produziertem Dampf. So sind weiter in vorteilhafter Weise in dem Gargefäß und in dem darauf gesondert vorgesehenen, bevorzugt aufgesetzten Obergefäß Speisen zubereitbar, welche bspw. aufgrund ihrer Empfindlichkeit unterschiedliche Dampfmengen pro Zeiteinheit benötigen. Der zufolge entsprechender Einstellung ggf. überschüssige, entsprechend nicht in das Obergefäß durchgelassene Dampf wird bevorzugt im Bereich der Trennwand kondensiert und weiter bevorzugt zurück in das Gargefäß geleitet oder frei nach außen in die Umgebung abgelassen. Das vorgeschlagene Verfahren ist darüber hinaus auch anwendbar bei einem Gargefäß mit hierauf angeordnetem, nicht vom Gargefäß lösbarem Obergefäß, wobei auch hier ein Gargut-Auflageboden die Trennwand zwischen Gargefäß und Obergefäß darstellt.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

So ist in einer bevorzugten Ausgestaltung vorgesehen, dass der Dampfdurchlass durch eine in dem Gargut-Auflageboden ausgebildete Blende einstellbar ist. Eine solche Blende zur Einstellung insbesondere der freien Durchtritts-Öffnungsfläche für den Dampf ist bevorzugt durch den Benutzer manuell einstellbar, bspw. zufolge Dreh- und/oder Schiebeverlagerung eines Blendenteils. Auch ist diesbezüglich eine bspw. über eine Gerätesteuerung der das Gargefäß aufnehmenden Küchenmaschine die Einstellung der Blende selbsttätig durchführbar, so weiter bspw. elektromechanisch. Darüber hinaus ist insbesondere bei einer bevorzugten gesonderten Ausgestaltung von Gargefäß und Obergefäß die relative Zuordnung des Obergefäßes in Umfangsrichtung zum Gargefäß zur blendenartigen Einstellung des Dampfdurchlasses nutzbar.

Weiter betrifft die Erfindung eine Zusammenfassung von einem Gargefäß mit einem Obergefäß, wobei das Gargefäß und das Obergefäß durch eine dampfdurchlässige Trennwand voneinander gesondert sind.

Eine solche Zusammenfassung ist aus dem Stand der Technik bekannt. Diesbezüglich wird auf die eingangs zitierte Literatur verwiesen, darüber hinaus weiter auch bspw. auf die DE 10 2007 060749 A1. Der Inhalt dieser Patentanmeldungen wird hiermit vollinhaltlich in die Offenbarung vorliegender Erfindung mit einbezogen, auch zu dem Zweck, Merkmale dieser Patentanmeldungen in Ansprüche vorliegender Erfindung mit einzubeziehen. So ist bekannt, das Gargefäß insbesondere im Bodenbereich aufheizbar auszugestalten, dies insbesondere im Zusammenhang mit einer Anordnung des Gargefäßes in einer elektrischen Küchenmaschine. Eine solche Küchenmaschine ist weiter auch als "Vorwerk-Thermomix" bekannt. Hierbei wird in dem Gargefäß, in welchem zugleich ein Gargut aufgenommen sein kann, ein Dampf erzeugt, der bevorzugt die dampfdurchlässige Trennwand durchsetzend in das Obergefäß geleitet wird, um hier ein darin befindliches Gargut Dampf-zu-garen.

Im Hinblick auf den bekannten Stand der Technik wird eine technische Problematik der Erfindung darin gesehen, eine Zusammenfassung der in Rede stehenden Art insbesondere hinsichtlich des Garprozesses im Obergefäß weiter zu verbessern.

Eine mögliche Lösung der Aufgabe ist nach einem ersten Erfindungsgedanken bei einer Zusammenfassung gegeben, bei welcher darauf abgestellt ist, dass der Dampfdurchlass einstellbar ist. Zufolge bevorzugter Einstellung der freien Dampfdurchtritts-Öffnungsfläche ist zwischen Gargefäß und Obergefäß die in das Obergefäß eintretende Dampfmenge pro Zeiteinheit einstellbar, dies bei bevorzugt gleichbleibender Menge an in dem Gargefäß produziertem Dampf. So sind weiter in vorteilhafter Weise in dem Gargefäß und in dem darauf gesondert vorgesehenen, bevorzugt aufgesetzten Obergefäß Speisen zubereitbar, welche bspw. aufgrund ihrer Empfindlichkeit unterschiedliche Dampfmengen pro Zeiteinheit benötigen. Der zufolge entsprechender Einstellung ggf. überschüssige, entsprechend nicht in das Obergefäß durchgelassene Dampf ist bevorzugt im Bereich der Trennwand kondensierbar und weiter bevorzugt zurück in das Gargefäß geleitet oder frei nach außen in die Umgebung ablassbar.

Weitere Merkmale der Erfindung sind nachstehend, auch in der Figurenbeschreibung, oftmals in ihrer bevorzugten Zuordnung zum Gegenstand des Anspruches 3 oder zu Merkmalen weiterer Ansprüche erläutert. Sie können aber auch in einer Zuordnung zu nur einzelnen Merkmalen des Anspruches 3 oder des jeweiligen weiteren Anspruches oder jeweils unabhängig von Bedeutung sein.

Bevorzugt wird diesbezüglich, dass das Gargefäß einen Deckel aufweist und ein das Obergefäß nach unten begrenzender Gargut-Auflageboden die Trennwand, wobei in dem Deckel ein Dampfdurchlass vorgesehen ist, wobei weiter durch unterschiedliche Umfangsstellungen von Obergefäß und Deckel zueinander der unterschiedliche Dampfdurchlass einstellbar ist. Zufolge dieser Ausgestaltung ist eine blendenartige Einstellung des Dampfdurchlasses vornehmbar, dies bevorzugt zufolge einer relativen Umfangsausrichtung des Obergefäßes zu dem Gargefäß, weiter insbesondere zu dem Deckel des Gargefäßes. Das Obergefäß steht hierbei bevorzugt mit dessen Trennwand bzw. Gargut-Auflageboden auf dem Deckel des Gargefäßes auf, weiter bevorzugt unter zumindest teilweise flächiger Abstützung auf dem Deckel. Sowohl der Deckel als auch die Trennwand weisen zumindest jeweils eine Dampfdurchlassöffnung auf, die zumindest in einer Umfangsstellung des Obergefäßes relativ zu dem Deckel einen Dampfdurchlass ermöglichen. In weiteren Umfangsstellungen des Obergefäßes relativ zum Deckel ist die zufolge entsprechender Ausrichtung der Durchlassöffnungen zueinander belassene Öffnungsfläche einstellbar zwischen einer minimalen und einer maximalen Öffnungsfläche, wobei eine minimale Öffnungsfläche auch gegen Null tendieren kann, so dass in einer Relativstellung des Obergefäßes zu dem Deckel bzw. zu dem Gargefäß ein Verschluss der Durchlassöffnung und somit eine Unterdrückung des Dampfdurchlasses in das Obergefäß erreicht sein kann. Bevorzugt werden vordefinierte Umfangsstellungen des Obergefäßes relativ zu dem Deckel, so insbesondere zufolge entsprechender Festlegung des Obergefäßes an dem Deckel in den vorgegebenen Umfangsstellungen. Die Festlegung kann hierbei mechanisch, bspw. zufolge einer Rast- oder Bajonett-Festlegung erreicht sein, darüber hinaus, wie weiter bevorzugt, zufolge magnetischer Haltekräfte. Bevorzugt ist das Obergefäß in zwei oder mehr bis hin zu 60 Umfangsstellungen an dem Deckel festsetzbar, weiter bevorzugt in 3 bis 80 Stellungen. In alternativer Ausgestaltung ist eine stufenlose Umfangseinstellung des Obergefäßes relativ zum Deckel vorgesehen, dies unter entsprechend bevorzugter stufenloser Einstellung des Dampfdurchlasses infolge blendenartiger Vergrößerung oder Verkleinerung der Dampfdurchlassöffnung.

In diesem Zusammenhang ist weiter bevorzugt vorgesehen, dass der Deckel und der Auflageboden miteinander teilweise in Überdeckung befindliche, unrunde Öffnungen aufweisen, so insbesondere ovale, langloch- oder auch langgestreckt rechteckförmige Öffnungen (jeweils bezogen auf einen Grundriss). Liegen diese Öffnungen von Deckel und Auflageboden in einer vertikalen Projektion bevorzugt konturgleich übereinander, so ist hierdurch die größtmögliche Dampfdurchlass-Öffnung gegeben, dies entsprechend zur Ermöglichung eines größtmöglichen Dampfdurchlasses in das Obergefäß. Bevorzugt ist in einer hierzu um 90° in Umfangsrichtung verdrehten Stellung des Obergefäßes relativ zum Deckel in der projizierten Schnittfläche der beiden Öffnungen von Deckel und Auflageboden die kleinstmögliche Öffnungsfläche gegeben, entsprechend zum reduzierten Dampfdurchlass. Die diesbezüglichen Öffnungen sind weiter bevorzugt mit Bezug auf einen Grundriss von Deckel und/oder Auflageboden in Betriebsstellung eine vertikale Mittenachse von Gargefäß und/oder Obergefäß mittig aufnehmend angeordnet.

Zudem ist bevorzugt, dass der Deckel und der Auflageboden Öffnungen aufweisen, die in unterschiedlichem Überdeckungsgrad zueinander anordbar sind. Diesbezüglich sind bevorzugt sowohl im Deckel als auch in dem Auflageboden jeweils mehrere Öffnungen vorgesehen, so weiter insbesondere unter jeweiliger Anordnung der Öffnungen im Deckel bzw. im Auflageboden entlang einer konzentrisch zu einer Mittenachse von Gargefäß bzw. Obergefäß verlaufenden Kreislinie. Zufolge unterschiedlicher Anordnung des Obergefäßes in Umfangsrichtung relativ zu dem Deckel sind entsprechend unterschiedliche Überdeckungsgrade der Öffnungen von Deckel und Auflageboden erreichbar. Auch können in diesem Zusammenhang deckel- und auch auflagebodenseitig jeweils nur eine Öffnung vorgesehen sein, dies bei exzentrischer Anordnung derselben im Hinblick auf eine Mittenachse von Gargefäß und/oder Obergefäß. Hierbei liegen die Öffnungen von Deckel und Auflageboden in einer bevorzugten Umfangsstellung des Obergefäßes relativ zum Deckel in Überdeckung, belassend entsprechend eine größtmögliche Öffnungsfläche. In einer weiteren, in Umfangsrichtung verdrehten Stellung des Obergefäßes relativ zum Deckel sind die Öffnungen von Deckel und Auflageboden versetzt und liegen entsprechend gegebenenfalls nur teilweise in Überdeckung zur Belassung einer flächenmäßig verringerten Durchlassöffnung, wobei weiter der Überdeckungsgrad der Öffnungen von Deckel und Auflageboden zueinander zumindest in einer Relativstellung des Obergefäßes zum Deckel gegen Null tendieren kann, so dass sich entsprechend keine Überdeckung ergibt und der Dampfdurchlass entsprechend unterbunden ist.

Alternativ zu einer rotatorischen Bewegung, bspw. des Obergefäßes relativ zum Deckel, ist zur Einstellung des Dampfdurchlasses, bevorzugt infolge Übereinanderanordnung von Öffnungen in unterschiedlichem Überdeckungsgrad, auch eine lineare Bewegung bspw. durch Schieben zumindest eines mindestens eine Öffnung aufweisenden Teils möglich, so weiter bspw. eine an dem Deckel oder an dem Obergefäß im Bereich des Auflagebodens bzw. im Bereich der Trennwand vorgesehener Schieber.

Weiter bevorzugt ist die Beeinflussung des Dampfstromes insbesondere zufolge Ausrichtung der Öffnungen von Deckel und Auflageboden in unterschiedlichem Überdeckungsgrad bei einer rotatorischen Bewegung der Öffnungen relativ zueinander, darüber hinaus auch bei einer linearen Bewegung der Öffnungen relativ zueinander, linear ansteigend bzw. abfallend; in weiter bevorzugter alternativer Ausgestaltung nicht linear.

Auch ist bevorzugt der Abstand zwischen dem Auflageboden und der Oberseite des Deckels einstellbar, so bspw. zufolge Ein- bzw. Ausfahren entsprechender Abstandselemente, welche deckel- oder auflagebodenseitig vorgesehen gegen die zugewandte Fläche des Auflagebodens bzw. des Deckels treten. Bevorzugt wird diesbezüglich eine Ausgestaltung, bei welcher insbesondere das Obergefäß zufolge Verdrehung in Umfangsrichtung relativ zu dem Deckel eine Beabstandung des Auflagebodens zur Oberseite des Deckels bewirkt, dies weiter bevorzugt unter Nutzung einer schiefen Ebene. Hierzu sind in einer Ausgestaltung bevorzugt oberseitig des Deckels zumindest zwei, bevorzugt drei, ggf. auch vier oder mehr, gegenüberliegende, rampenartige Stützbereiche vorgesehen, die weiter bevorzugt mit entsprechenden Ausformungen unterseitig des Auflagebodens zusammenwirken. Auch hierbei ist eine stufenlose Höhenverstellung bevorzugt; alternativ eine stufenweise Verstellung mit bevorzugter Festlegung des Obergefäßes in der jeweiligen (Dreh-)Stellung an dem Deckel.

In vorteilhafter Weise ist bevorzugt im Zuge der Änderung des vertikalen Abstands eine Dampfdurchtrittsöffnung hinsichtlich ihrer freien Dampfdurchlässigkeit veränderbar. So ist bevorzugt in einer nicht vertikal beabstandeten Stellung von Auflageboden und Deckel ein Dampfdurchlass unterbunden oder zumindest minimiert, während in einer vertikal obersten Beabstandungsstellung des Auflagebodens relativ zur Oberseite des Deckels ein maximaler Dampfdurchlass gegeben ist. Weiter alternativ ist eine umgekehrte Lösung vorgesehen, bei welcher bei minimalem bzw. nicht vorhandenem Abstand zwischen Auflageboden und Deckel ein maximaler Dampfdurchlass und bei Maximalbeabstandung ein minimaler Dampfdurchlass in das Obergefäß erreicht ist. Auch ist zufolge der vorgeschlagenen möglichen vertikalen Beabstandung zumindest eine weitere, bevorzugt zur Umgebung hin sich öffnende Dampfdurchlassöffnung freilegbar, so dass bei einer vertikalen Beabstandung des Auflagebodens zum Deckel zumindest ein Teil des durch die Deckelöffnung austretenden Dampfes frei nach außen in die Umgebung ausströmt und entsprechend nur ein Teil des Dampfes eine Durchlassöffnung im Auflageboden durchsetzt.

Auch ist in diesem Zusammenhang bevorzugt vorgesehen, dass an dem Auflageboden nach unten ragend oder an dem Deckel des Gargefäßes nach oben abstehend ein vorzugsweise keilartiger Vorsprung vorgesehen ist, der in eine an dem Deckel oder an dem Auflageboden ausgebildete Durchtrittsöffnung einragt. In Abhängigkeit von einem vertikalen Abstand zwischen Auflageboden und Oberseite des Deckels ergibt sich ein mehr oder weniger tiefes Einragen des keilartigen Vorsprungs in die Durchtrittsöffnung, zur entsprechenden Reduzierung bzw. Erweiterung des freien Durchlass-Öffnungsquerschnittes. In einer maximal in die Durchtrittsöffnung eingetauchten Stellung des keilartigen Vorsprunges ist bevorzugt ein insbesondere im Grundriss kreisringförmiger Durchlassquerschnitt belassen. Alternativ ist in dieser Stellung die Dampfdurchtrittsöffnung durch den keilartigen Vorsprung verschlossen, so dass entsprechend kein Dampf aus dem Gargefäß austreten oder zumindest kein Dampf in das Obergefäß eintreten kann. Die Beeinflussung der Durchtrittsöffnungsfläche mittels des vorgeschlagenen keilartigen Vorsprungs ist in einer möglichen Ausgestaltung kombiniert mit einer Höhenverlagerung des Obergefäßes zu dem Deckel. Es kann aber eine Beeinflussung des Dampfdurchtrittes in das Obergefäß auch allein durch den keilartigen Vorsprung erreicht sein, so durch entsprechende Auf- und Abverlagerung desselben. Weiter kann diese Auf- und Abverlagerung des Vorsprungs gekoppelt sein an eine Drehverlagerung des Obergefäßes relativ zu dem Gargefäß.

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht (gerade) durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: in Seitenansicht eine elektrische Küchenmaschine mit einem Gargefäß und einem Aufsatzteil in Form eines Obergefäßes;
- Fig. 2: eine Vertikalschnittdarstellung durch den Deckelbereich des Gargefäßes mit aufgesetztem Obergefäß;
- Fig. 3: den Deckel des Gargefäßes in einer perspektivischen Einzeldarstellung;
- Fig. 4: die Herausvergrößerung des Bereiches IV in Fig. 3;
- Fig. 5: in perspektivischer Unteransicht das Obergefäß;
- Fig. 6: die Herausvergrößerung des Bereiches VI in Fig. 5;
- Fig. 7: in schematischer Darstellung den Deckel des Gargefäßes sowie das Obergefäß in einer ersten relativen Umfangsstellung zueinander, unter Bildung einer maximalen Öffnungsfläche zum Durchtritt von Dampf;
- Fig. 8: eine der Fig. 7 entsprechende Darstellung, jedoch in einer umfangsversetzten Stellung des Obergefäßes relativ zum Deckel, bei entsprechender Reduzierung der Öffnungsfläche;
- Fig. 9: eine weitere Darstellung gemäß Fig. 7 bei weiterer Relativverdrehung des Obergefäßes gegenüber dem Deckel unter Erzielung einer minimalen Öffnungsfläche;
- Fig. 10: in schematischer Draufsicht den Deckel und das Obergefäß in einer relativen Drehausrichtung zum Anbieten einer maximalen Durchtritts-Öffnungsfläche, eine zweite Ausführungsform betreffend;
- Fig. 11: eine der Fig. 10 entsprechende Darstellung, nach Verdrehen des Obergefäßes in Umfangsrichtung relativ zu dem Deckel;
- Fig. 12: in schematischer Draufsichtdarstellung den Deckel und das Obergefäß in Einzeldarstellungen, eine weitere Ausführungsform betreffend;
- Fig. 13: die zusammengesetzte Stellung von Deckel und Obergefäß in einer Ausrichtung des Obergefäßes gemäß Fig. 12;
- Fig. 14: eine der Fig. 13 entsprechende Darstellung nach Verdrehen des Obergefäßes in Umfangsrichtung relativ zu dem Deckel;
- Fig. 15: eine weitere Verdrehstellung des Obergefäßes relativ zum Deckel;
- Fig. 16: in weiterer Ausführungsform eine Seitenansicht gegen das Gargefäß mit aufgesetztem Obergefäß, wobei zur Einstellung eines unterschiedlichen Dampfdurchlasses ein Schieber vorgesehen ist;
- Fig. 17: eine schematische Draufsichtdarstellung, insbesondere den Zusammenwirkungsbereich einer Durchtrittsöffnung mit dem blendenartigen Schieber betreffend;
- Fig. 18: eine der Fig. 17 entsprechende Darstellung, jedoch bei alternativer Ausgestaltung der schieberartigen Blende;
- Fig. 19: eine der Fig. 13 entsprechende schematische Draufsichtdarstellung, eine weitere Ausführungsform betreffend;
- Fig. 20: in perspektivischer Darstellung gemäß Fig. 3 den Deckel in einer weiteren Ausführungsform;
- Fig. 21: in Seitenansichtdarstellung das Gargefäß mit einem Deckel gemäß Fig. 20 und einem aufgesetzten Obergefäß in einer Umfangsstellung;
- Fig. 22: eine der Fig. 21 entsprechende Darstellung, jedoch nach Verdrehen des Obergefäßes in Umfangsrichtung;
- Fig. 23: in alternativer Ausführungsform eine Ergänzung zu der Ausführungsform gemäß den Fig. 20 bis 22 einen Vertikalschnitt durch eine Durchtrittsöffnung mit einem mit dieser zusammenwirkenden keilartigen Vorsprung.

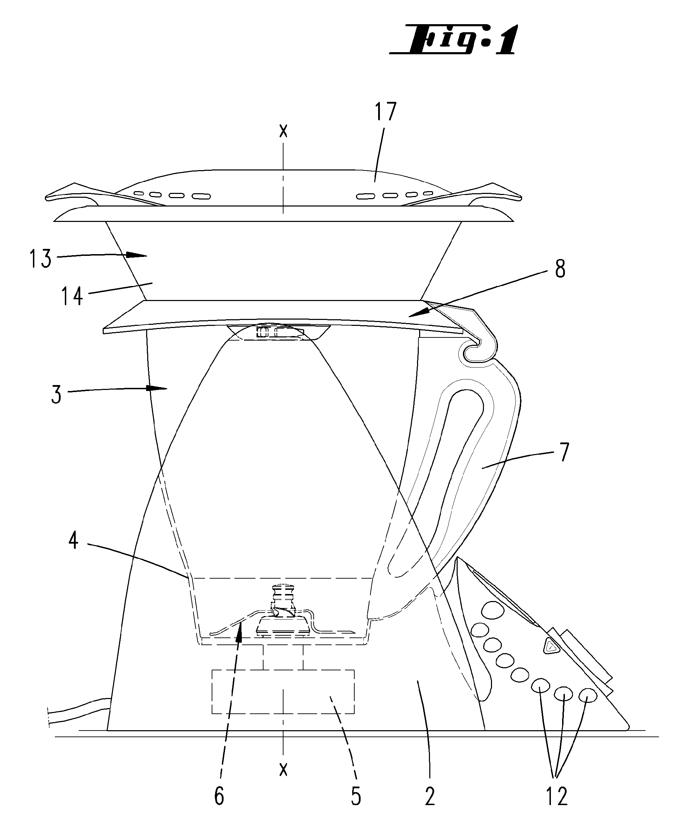

Dargestellt und beschrieben ist zunächst mit Bezug zu Fig. 1 eine Küchenmaschine 1 mit einem Gehäuse 2 zur Aufnahme eines Gargefäßes 3.

Zur Lagerung des Gargefäßes 3 ist die Küchenmaschine 1 gehäuseseitig mit einer Gefäßaufnahme 4 versehen. Ein in dem Gehäuse 2 in der dargestellten Ausführungsform bevorzugt angeordneter Elektromotor 5 dient zum Antrieb eines in dem Gargefäß 3 bodenseitig vorgesehenen Rührwerks 6, welches über eine Kupplungsanordnung mit der Antriebswelle des Elektromotors 5 in kraftschlüssiger Verbindung bringbar ist.

Das Gargefäß 3 ist mit einem seitlichen Handgriff 7 versehen. Dieser erstreckt sich nahezu über die gesamte mantelwandaußenseitige Höhe des Gargefäßes 3, welche Mantelwandung des Gargefäßes 3 sich zur nach oben gerichteten Gargefäßöffnung hin trichterförmig erweitert.

Die Gargefäßöffnung ist insbesondere im Betrieb der Küchenmaschine 1, weiter insbesondere im Betrieb des Gargefäßes 3 überdeckt von einem Deckel 8. Dieser ist bevorzugt bajonettartig verriegelbar, so insbesondere in Zusammenwirkung mit turmartigen Gehäuseabschnitten der Küchenmaschine 1, nach welcher Verriegelung der Deckel 8 auch fest mit dem Gargefäß 3 verbunden ist.

Der Deckel 8 bietet eine dem Gargefäßinneren abgewandte, nach oben gerichtete Aufstandsfläche 9, insbesondere gebildet durch die Oberseite einer insbesondere im Betrieb im Wesentlichen horizontal ausgerichteten Deckelwand 10. Weiter bevorzugt ist die Deckelwand 10 bzw. die Aufstandsfläche 9 quergerichtet zu einer im Betrieb vertikalen Achse x, welche Achse insbesondere das Gargefäß 3 sowie die Aufstandsfläche 9 mittig durchsetzt und weiter bevorzugt die Drehachse des im Bodenbereich des Gargefäßes 3 bevorzugt vorgesehenen Rührwerks 6 aufnimmt.

In der Deckelwand 10 ist weiter bevorzugt ein Dampfdurchlass 11 ausgebildet. Hierbei handelt es sich um eine die Deckelwand 10 durchsetzende Öffnung.

In der vorbeschriebenen Konstellation ist die Küchenmaschine 1 dazu geeignet, in dem Gargefäß 3 ggf. unter ständigem Umwälzen des in dem Gargefäß 3 befindlichen Mediums, wie bspw. Wasser oder eine Brühe, eine Speise insbesondere durch Wärmezufuhr zuzubereiten. Hierzu ist weiter bevorzugt, insbesondere dem Bodenbereich des Gargefäßes 3 zugeordnet, eine Heizung in der Küchenmaschine 1 vorgesehen. Diese Heizung ist bevorzugt über Temperatursteller 12 in Form von Tasten oder Drehstellern hinsichtlich ihrer Heizleistung einstellbar.

Die Küchenmaschine 1 dient darüber hinaus bevorzugt auch zum Garen von Speisen, so insbesondere unter Nutzung des in dem Gargefäß 3 erzeugten und durch den Dampfdurchlass 11 des Deckels 8 nach oben abziehenden Dampfes. Hierzu ist gemäß der Darstellung in Fig. 1 auf dem Deckel 8 des Gargefäßes 3 ein Aufsatzteil 13 in Form eines Obergefäßes 14 aufgesetzt. Dieses ist bevorzugt schüsselartig geformt mit einer in der Aufsetzstellung bevorzugt parallel zur Aufstandsfläche 9 des Deckels 8 verlaufenden Trennwand 15 in Form eines Gargut-Auflagebodens 16. Dies bietet in bevorzugter Ausgestaltung ein großflächiges, weiter bevorzugt vollflächiges Abstellen des Obergefäßes 14 auf dem Deckel 8.

Das Obergefäß 14 ist weiter bevorzugt im Betriebszustand überdeckt von einem Obergefäßdeckel 17.

Zum Eintritt von in dem Gargefäß 3 erzeugten Dampf in das Obergefäß 14 ist im Bereich des Gargut-Auflagebodens 16 eine Dampfdurchtrittsöffnung 18 ausgebildet. Entsprechend ist der Gargut-Auflageboden 16 bzw. die hierdurch gebildete Trennwand 15 zumindest partiell dampfdurchlässig eingestellt.

In bevorzugter Ausgestaltung ist das Aufsatzteil 13 bzw. das Obergefäß 14 auf dem Deckel 8 des Gargefäßes 3 zumindest in einer Umfangsausrichtung des Obergefäßes 14 relativ zum Deckel 8 festsetzbar. Dies ist bevorzugt, wie auch dargestellt, erreicht durch eine magnetische Festsetzung.

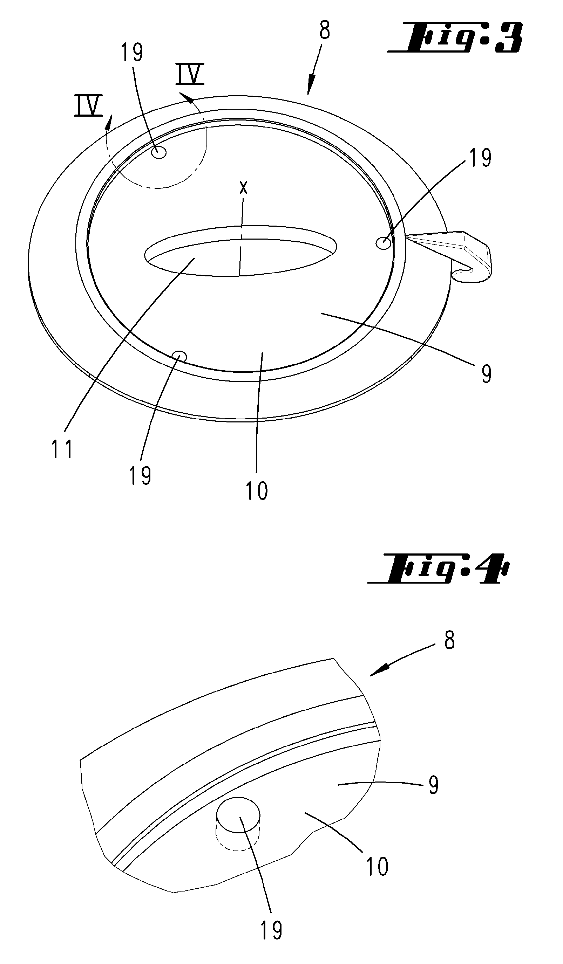

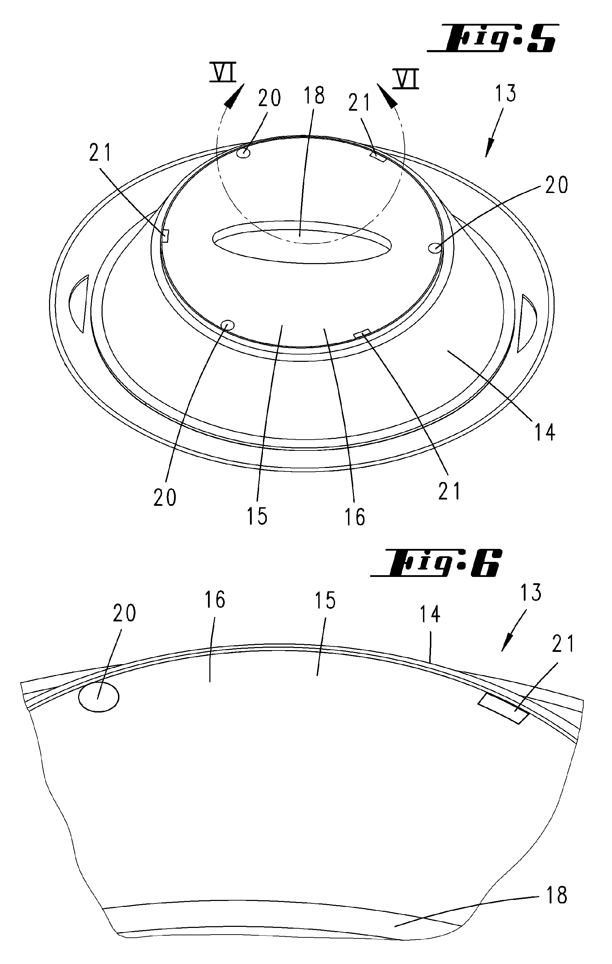

Hierzu sind gemäß dem in den Fig. 1 bis 9 dargestellten ersten Ausführungsbeispiel in dem Deckel 8, insbesondere in der Deckelwand 10, zugeordnet einem radial äußeren Randbereich der Aufstandsfläche 9, drei oder mehr Magnete 19 in das Deckelmaterial eingelassen. Mehrere Magnete erhöhen ersichtlich auch die Anzahl der möglichen Positionen. Je nach Stärke der Magnete kann hierdurch auch die Gesamthaltekraft erhöht werden. Die Anzahl der Magnete im Deckel bzw. in der Aufstandsfläche können auch unterschiedlich sein. Durch die Winkelverteilung kann erreicht werden, dass bspw. immer eine Mindestanzahl von bspw. drei Magneten in der Aufstandsfläche und im Deckel ausgerichtet zueinander sind, also sich in der Wirkstellung befinden, eine Verschiebung der Aufstandsfläche dann aber um einen geringeren Winkelbetrag als bspw. 120° möglich ist, und bei diesem geringeren Winkelbetrag, bevorzugt in der Halbierenden zwischen den zwei in Wirkstellung befindlichen Magneten, dann ein weiterer Magnet in Wirkstellung mit dem zuvor schon "aktiv" gewesenen Magneten oder Metallteil in dem Deckel kommt. Hierbei handelt es sich bevorzugt um scheibenförmige Magnete mit einer bevorzugten Bauhöhe von 2 mm und einem bevorzugten Durchmesser von 8 mm, wobei die Anordnung der Magnete 19 weiter so gewählt ist, dass eine der Flachseiten eines jeden Magnets 19 mit der Ebene der Aufstandsfläche 9 fluchtet oder nahezu annähernd mit dieser fluchtet.

Alternativ zu einzelnen Magneten kann auch ein, bevorzugt geschlossen umlaufend ausgebildet, bandförmiges Magnetelement verwirklicht sein. Dieses Magnetelement kann aus einem einzigen magnetischen Werkstoff bestehen oder aus einer Vielzahl von einzelnen in dieser Konstellation nebeneinander angeordneten Magneten. Es wird beispielsweise auf die bei Kühlschränken bekannten Streifenmagnet-Verschlüsse verwiesen.

Weiter sind die Magnete 19 über den Umfang betrachtet gleichmäßig beabstandet vorgesehen. Sie schließen entsprechend im Falle von drei Magneten in Umfangsrichtung jeweils einen Winkel von bevorzugt 120° zueinander ein. Es können darüber hinaus auch mehr Magnete vorgesehen sein, wobei sich dann entsprechend bevorzugt auch unterschiedliche - kleinere - Winkelabstände zwischen den Magneten ergeben. Beispielsweise bei vier Magneten ist dann bevorzugt ein Winkelabstand von 90° zwischen den Magneten verwirklicht.

Darüber hinaus sind weiter bevorzugt auch an dem Aufsatzteil 13, weiter insbesondere in dem Gargut-Auflageboden 16 Magnete 20 angeordnet, die insbesondere bezüglich ihres radialen Abstandes zur Achse x sowie bezüglich der umfangsmäßigen Beabstandung untereinander gleich angeordnet sind wie die Magnete 19 im Deckel 8. Auch hier handelt es sich bevorzugt um scheibenförmige Magnete der vorbeschriebenen Art und Dimension.

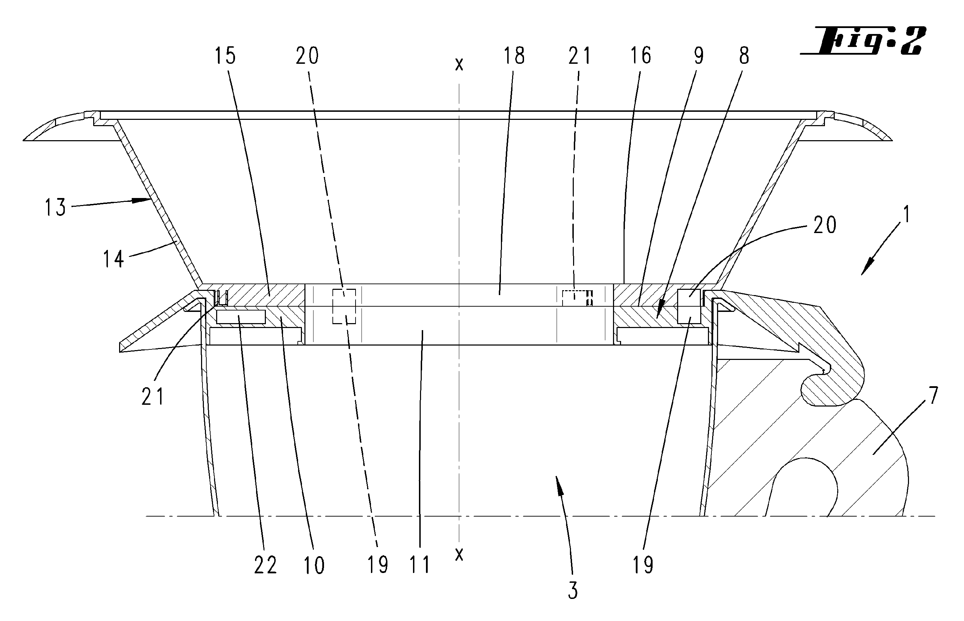

Die Magnete 19 und 20 von Deckel 8 und Obergefäß 14 sind so positioniert, dass in der ordnungsgemäßen Zusammenwirkungsstellung gemäß Fig. 2 entgegengesetzte Pole aufeinander zu weisen, so dass eine Festsetzung des Obergefäßes 14 auf dem Deckel 8 zufolge magnetischer Anziehung erreicht ist.

Des Weiteren sind im Bereich des Gargut-Auflagebodens 16 bevorzugt, wenngleich nicht zwingend, auf einer größeren Umfangslinie der Magnete 20 zwischen zwei in Umfangsrichtung benachbarten Magneten 20 eine Metallplatte (Eisenplatte) eingelassen.

Insbesondere die Aufstandsfläche 9 und die zugewandte Unterseite des Gargut-Auflagebodens 16, darüber hinaus die entsprechende Anordnung der Magnete 19 und 20 ist so gewählt, dass die aufeinander zu weisenden Flachseiten der Magnete 19 und 20 in der Zuordnungsstellung gering zueinander in Vertikalrichtung beabstandet sind, bis hin zu einer direkten Anlage.

Zur Anordnung des Obergefäßes 14 auf dem Deckel 8 wird das Obergefäß 14 durch den Benutzer in üblicher Weise auf den Deckel 8 bzw. auf dessen Aufstandsfläche 9 aufgestellt und hiernach ggf. in Umfangsrichtung ausgerichtet. Bei Annäherung der Magnete 19 und 20 richtet sich das Obergefäß 14 zufolge der Anziehungskräfte bevorzugt selbsttätig aus. Das Obergefäß 14 sitzt hiernach fest auf dem Deckel 8 bzw. auf dem Gargefäß 3 auf, kann entsprechend nicht, bspw. zufolge Anstoßen, herunterfallen. Dennoch ist das Obergefäß 14 durch den Benutzer wieder leicht von dem Gargefäß 3 bzw. von dem Deckel 8 lösbar, indem das Obergefäß 14 relativ zu dem in der Küchenmaschine 1 festgelegten Gargefäß 3 bzw. dem festgelegten Deckel 8 verdreht wird. Bei einem solchen Verdrehen auch der Magnete 19 und 20 gegeneinander nimmt die Anziehungskraft mit zunehmender Entfernung ab, womit ein leichtes Lösen der Magnetverbindung ermöglicht ist.

Die vorgeschlagene Lösung dient weiter bevorzugt auch in Zusammenwirkung mit anderen Aufsatzteilen, weiter ggf. auch mit Aufsatzteilen, welche zwischen dem Deckel 8 und dem Obergefäß 14 anordbar sind. Solche weiteren Aufsetzteile unterscheiden sich bevorzugt hinsichtlich ihrer Oberseite und ihrer Unterseite (bspw. bezüglich der gewünschten Funktion). Die Magnete 20 sind hierbei bevorzugt derart in dem Aufsatzteil 13 positioniert, dass eine nicht vorzuziehende Ausrichtung des Aufsatzteiles durch abstoßende Magnete 19 und 20 dem Benutzer verdeutlicht wird.

Darüber hinaus ist insbesondere zufolge der Anordnung mehrerer Magnete 19 und 20 die Positionierung bspw. des Obergefäßes 14 in unterschiedlichen Umfangsausrichtungen relativ zu dem Deckel 8 ermöglicht, so weiter gemäß dem dargestellten Ausführungsbeispiel in drei unterschiedlichen Umfangsausrichtungen.

Die jeweilige Umfangsausrichtung bspw. des Obergefäßes 14 ist bevorzugt über einen "Reed"-Kontakt abfragbar, welcher weiter bevorzugt bei entsprechender Positionierung bevorzugt innerhalb der Deckelwand 10 mit dort angeordneten Metallteilen, bevorzugt den Magneten 19, des Aufsatzteiles 13 zusammenwirkt. Diese Anordnung kann als zusätzliches Bedienelement (Mensch-Maschinen-Interface) benutzt werden. Je nach Position bzw. Ausrichtung des Obergefäßes 14 wird bspw. die Dampferzeugung für das Obergefäß 14 gesteuert, so bspw. für große oder kleine zu garende Portionen bzw. viel oder wenig Dampf. Weiter kann ein solcher Kontakt bei exakter Ausrichtung bspw. den nächsten Bearbeitungsschritt innerhalb einer in der Küchenmaschine 1 vorgesehenen Rezeptsteuerung freigeben. Darüber hinaus ist auch infolge einer solchen Kontaktierung der Heizdampf ausstellbar, sobald das Obergefäß 14 vom Deckel 8 entfernt wird. Ferner ist durch die Umfangsausrichtung des Obergefäßes 14 relativ zu dem Deckel 8 bevorzugt auch der Dampfdurchlass vom Gargefäß 3 in das Obergefäß 14 einstellbar.

Gemäß dem ersten Ausführungsbeispiel in den Fig. 1 bis 9 ist dies dadurch erreicht, dass zunächst der deckelseitige Dampfdurchlass 11 bevorzugt langgestreckt oval ausgebildet ist, dies bei bevorzugter mittiger Anordnung des Dampfdurchlasses 11 in der Deckelwand 10 (entsprechend die Achse x zentral aufnehmend).

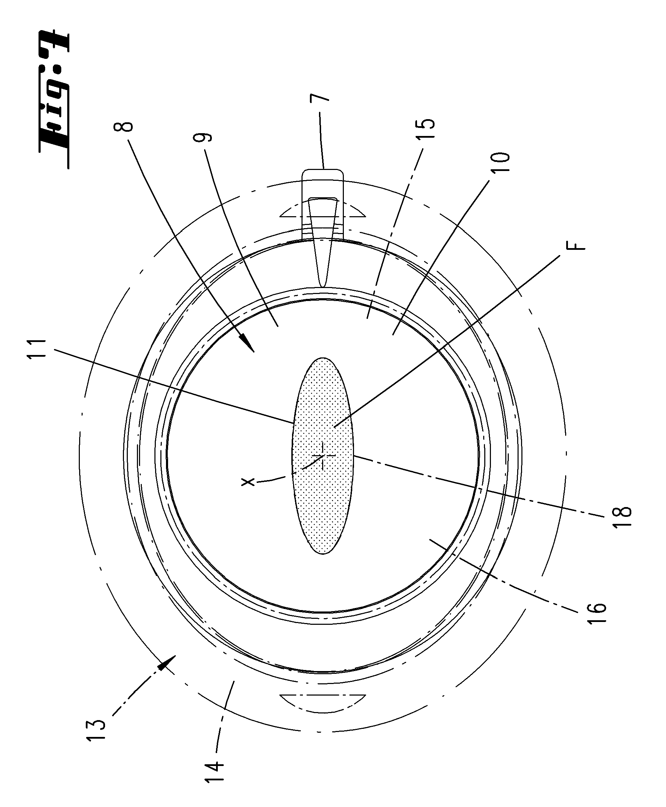

Die Dampfdurchtrittsöffnung 18 im Bereich des Gargut-Auflagebodens 16 ist in der ersten Ausführungsform bevorzugt konturgleich und gleich groß wie der Dampfdurchlass 11 des Deckels 8 ausgeformt, so dass die Dampfdurchtrittsöffnung 18 in einer Umfangsausrichtung des Obergefäßes 14 relativ zum Deckel 8 gemäß der Darstellung in Fig. 7 hinsichtlich seines umlaufenden Randes in vertikaler Überdeckung liegt zu dem umlaufenden Rand des deckelseitigen Dampfdurchlasses 11. Es ergibt sich entsprechend ein maximaler Dampfdurchlass bei maximaler Dampfdurchlass-Öffnungsfläche F (siehe punktierte Fläche in Fig. 7).

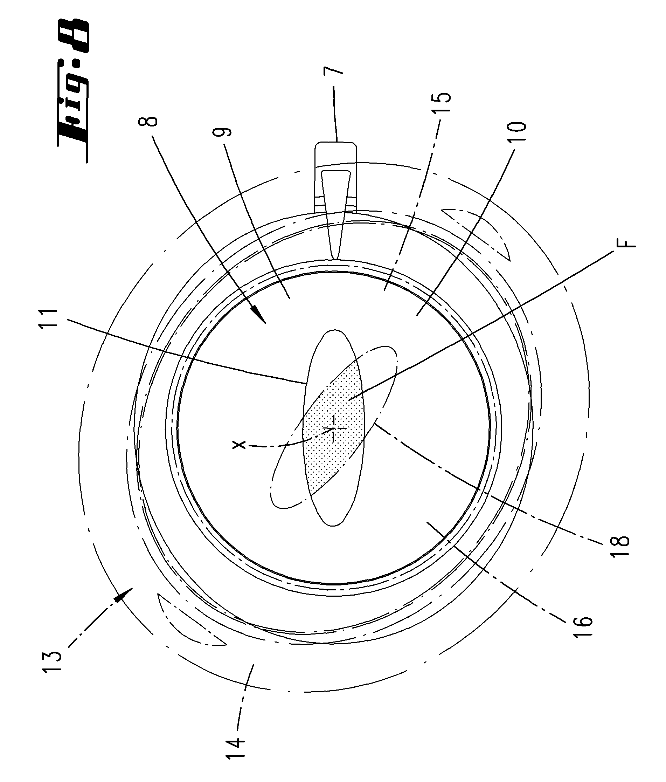

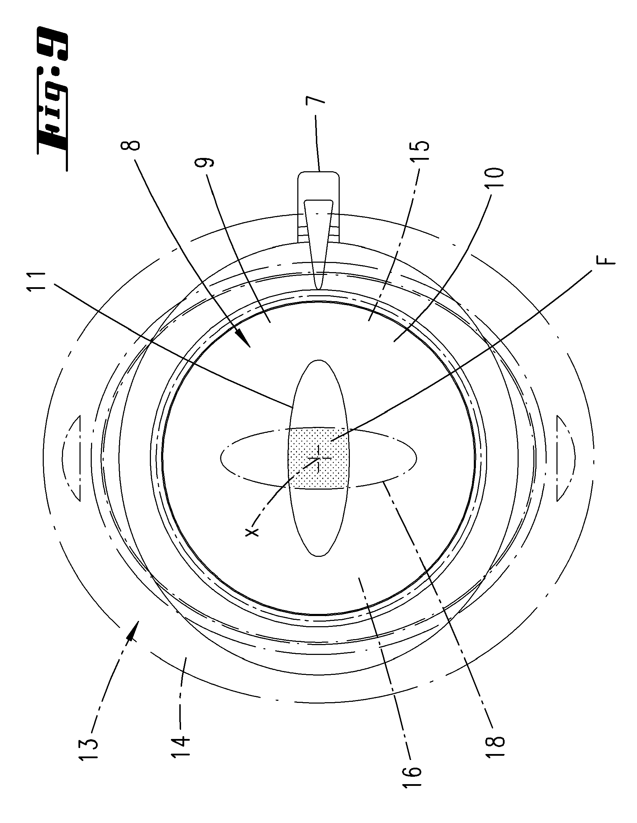

Durch die unterschiedlich möglichen Positionierungen des Obergefäßes 14 relativ zu dem Deckel 8 ist bevorzugt eine Steuerung der Dampfzufuhr in das Obergefäß 14 realisiert. Wird das Obergefäß 14 in einer anderen Position als in Fig. 7 dargestellt auf dem Deckel 8 aufgesetzt und bevorzugt magnetisch festgelegt, so wird bevorzugt der Volumenstrom des heißen Wasserdampfes stufenweise reguliert, so dass sich in den in den Fig. 8 und 9 beispielhaft dargestellten Obergefäß-Positionen zufolge entsprechender verdrehter Stellungen von Dampfdurchtrittsöffnung 18 und Dampfdurchlass 11 unterschiedlich große, gegenüber der Stellung in Fig. 7 reduzierte Dampfdurchtritts-Öffnungsflächen F ergeben (vgl. punktierte Flächen in den Fig. 8 und 9). Entsprechend wird die in das Obergefäß 14 eintretende Dampfmenge pro Zeiteinheit in Abhängigkeit von der Umfangsausrichtung des Obergefäßes 14 reguliert.

Etwaiger in dem Gargefäß 3 über die Menge des Dampfdurchtritts in das Obergefäß 14 hinaus produzierter Dampf kondensiert bspw. an der Unterseite des Deckels oder wird frei nach außen in die Umgebung abgelassen.

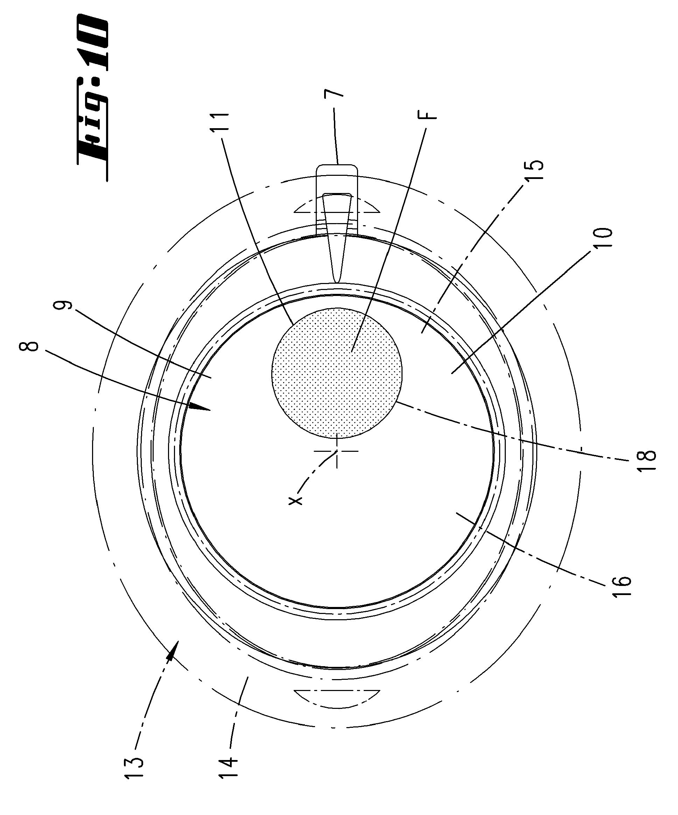

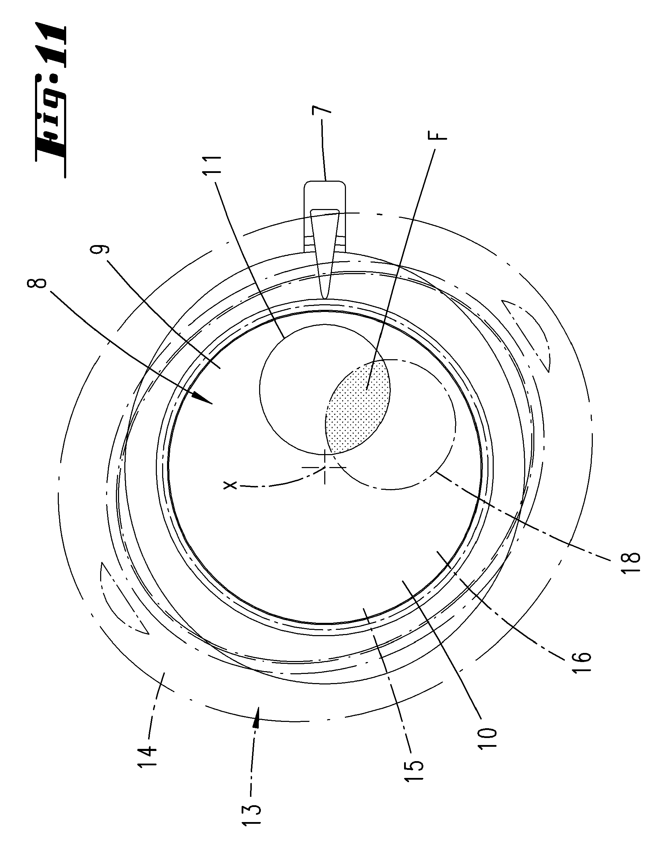

Die Fig. 10 und 11 zeigen eine weitere Ausführungsform hinsichtlich der Anordnung und Ausbildung von Dampfdurchlass 11 und Dampfdurchtrittsöffnung 18.

In diesem Beispiel sind diese beiden Öffnungen im Grundriss kreisförmig gestaltet, jedoch jeweils exzentrisch zur Achse x in der Deckelwand 10 bzw. in dem Gargut-Auflageboden 16 ausgeformt.

In Fig. 10 ist eine Ausrichtung des Obergefäßes 14 relativ zu dem Deckel 8 bzw. dem Gargefäß 3 schematisch dargestellt, in welcher der Dampfdurchlass 11 im Deckel 8 sowie die Dampfdurchtrittsöffnung 18 im Gargut-Auflageboden 16 übereinander liegen. In einer versetzten Umfangsausrichtung des Obergefäßes 14 gegenüber der Ausrichtung gemäß Fig. 10 überdeckt die Dampfdurchtrittsöffnung 18 des Gargut-Auflagebodens 16 nur noch teilweise den Dampfdurchlass 11 im Deckel 8 (siehe Fig. 11), so dass sich eine reduzierte Dampfdurchtritts-Öffnungsfläche F ergibt, was entsprechend eine Reduzierung des Dampfdurchtrittes in das Obergefäß 14 je Zeiteinheit zur Folge hat. Wenngleich nicht dargestellt, ist in einer möglichen weiteren Umfangsausrichtung des Obergefäßes 14 relativ zu dem Deckel 8 keine auch nur teilweise Überdeckung von Dampfdurchtrittsöffnung 18 und Dampfdurchlass 11 erreicht, womit entsprechend der Dampfdurchtritt bzw. Dampfeintritt in das Obergefäß 14 unterbunden ist.

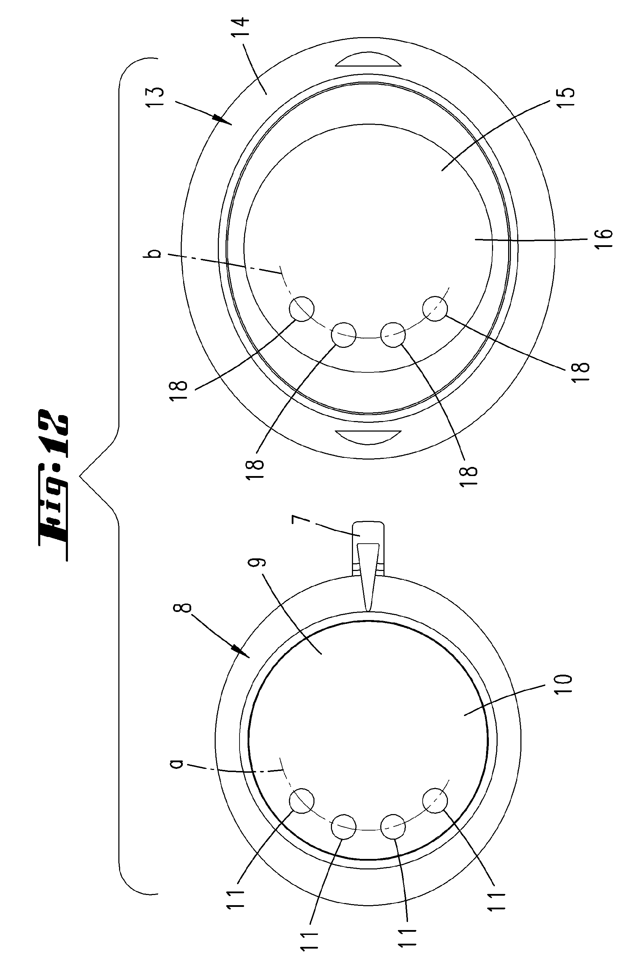

Eine weitere alternative Ausführungsform stellen die schematischen Darstellungen in den Fig. 12 bis 15 dar. In diesem Ausführungsbeispiel sind sowohl in dem Deckel 8 als auch in dem Gargut-Auflageboden 16 mehrere, hier bevorzugt gleich große und kreisförmige Dampfdurchlässe 11 sowie Dampfdurchtrittsöffnungen 18 vorgesehen, welche jeweils zugeordnet dem Deckel bzw. dem Auflageboden 16 auf einer konzentrisch zur Achse x ausgerichteten Kreislinie a bzw. b angeordnet sind. In dem dargestellten Ausführungsbeispiel sind jeweils vier Dampfdurchlässe 11 bzw. Dampfdurchtrittsöffnungen 18 vorgesehen, welche weiter bevorzugt in Umfangsrichtung zueinander gleichmäßig beabstandet angeordnet sind. Weiter sind diese Durchlässe bzw. Öffnungen insgesamt bevorzugt auf einer Halbkreislinie angeordnet.

Alternativ können auch mehr oder weniger solcher Durchlässe bzw. Öffnungen vorgesehen sein, so bspw. jeweils nur ein Durchlass bzw. Öffnung bis hin zu 20 oder 30. Darüber hinaus sind auch weitere Durchlässe oder Öffnungen auf konzentrischen Kreislinien radial innerhalb oder radial außerhalb der gezeigten Durchlässe bzw. Öffnungen möglich, bis hin zu einer insgesamt zumindest annähernd siebartigen Ausgestaltung der Deckelwand 10 und/oder des Auflagebodens 16.

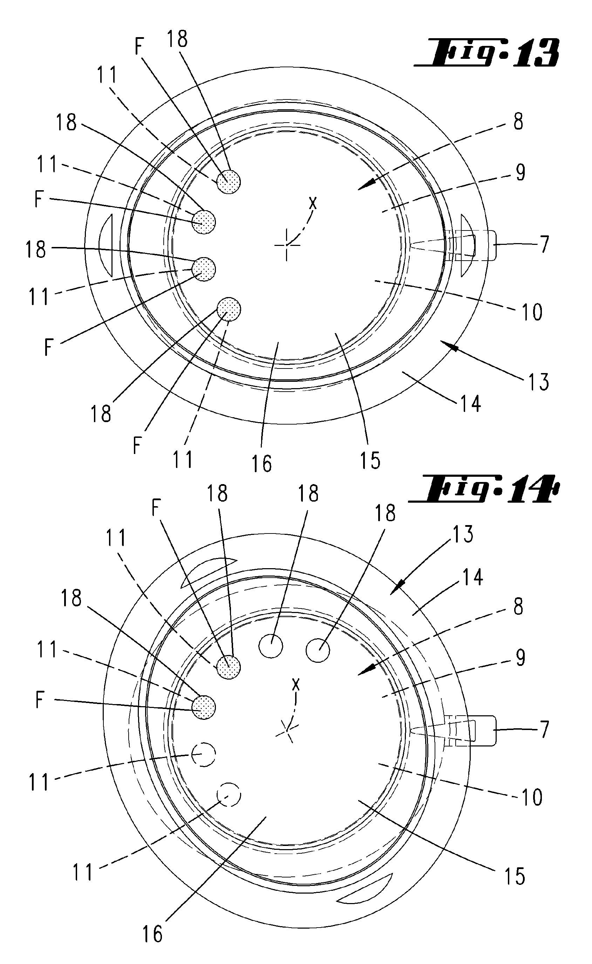

Ausgehend von der dargestellten Ausführungsform ist in Fig. 13 eine Umfangsausrichtung des Obergefäßes 14 dargestellt, in welcher die Dampfdurchtrittsöffnungen 18 im Auflageboden 16 in überdeckender Ausrichtung zu den Dampfdurchlässen 11 in der Deckelwandung 10 liegen. Entsprechend ist mit Bezug auf dieses Ausführungsbeispiel ein maximaler Dampfdurchlass in das Obergefäß 14 erreicht.

In einer weiteren, in Fig. 14 dargestellten Umfangsausrichtung des Obergefäßes 14 liegen nunmehr lediglich zwei Dampfdurchtrittsöffnungen 18 in Überdeckung zu den Dampfdurchlässen 11, womit hier der Dampfdurchlass auf die Hälfte reduziert ist.

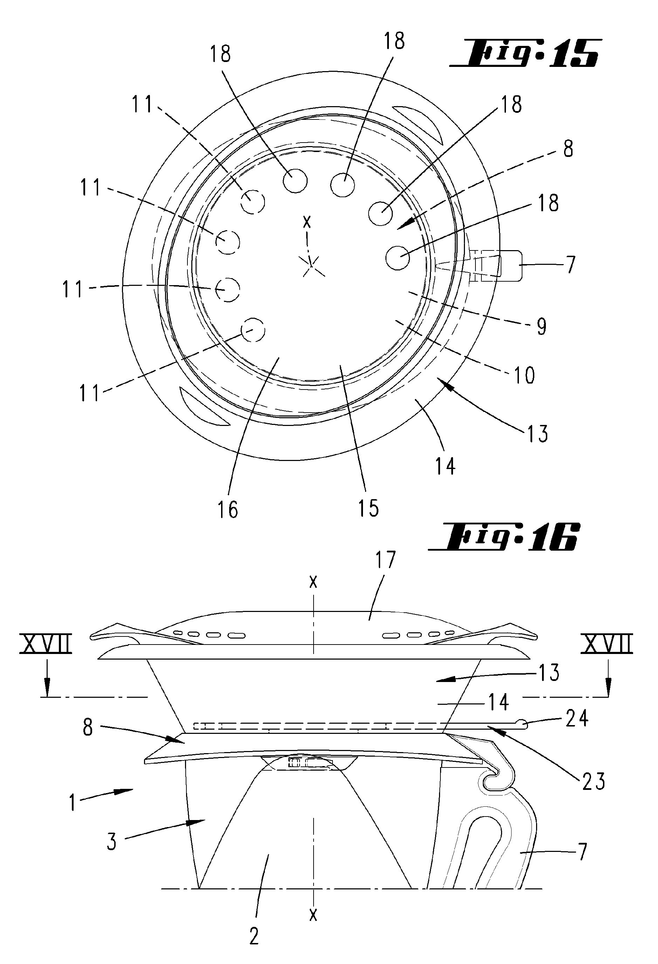

Fig. 15 zeigt eine Umfangsausrichtung des Obergefäßes 14, bei welcher keine Dampfdurchtrittsöffnung 18 in Überdeckung liegt zu einem Dampfdurchlass 11 des Deckels 8. Entsprechend ist der Dampfdurchsatz in das Obergefäß 14 unterbrochen.

Weiter alternativ ist der Dampfdurchsatz von dem Gargefäß 3 in das Obergefäß 14 bspw. durch eine Schieberblende 23 regulierbar. Diese ist bevorzugt handbetätigbar, wozu die Schieberblende 23 ein nach außen, bevorzugt in Richtung auf den Handgriff 7 frei abragendes Greifteil 24 aufweist.

Die Schieberblende 23 ist in einer Ausgestaltung in der Trennebene zwischen Deckel 8 und Obergefäß 14 bzw. Aufsatz 13 angeordnet zur blendenartigen Schieberregelung des deckelseitigen Dampfdurchlasses 11 und ggf. der auflagebodenseitigen Dampfdurchtrittsöffnung 18. In weiterer Ausgestaltung kann die Schieberblende 23 auch oberhalb des Auflagebodens 16, auf diesen in dem Obergefäß 14 aufliegend, angeordnet sein.

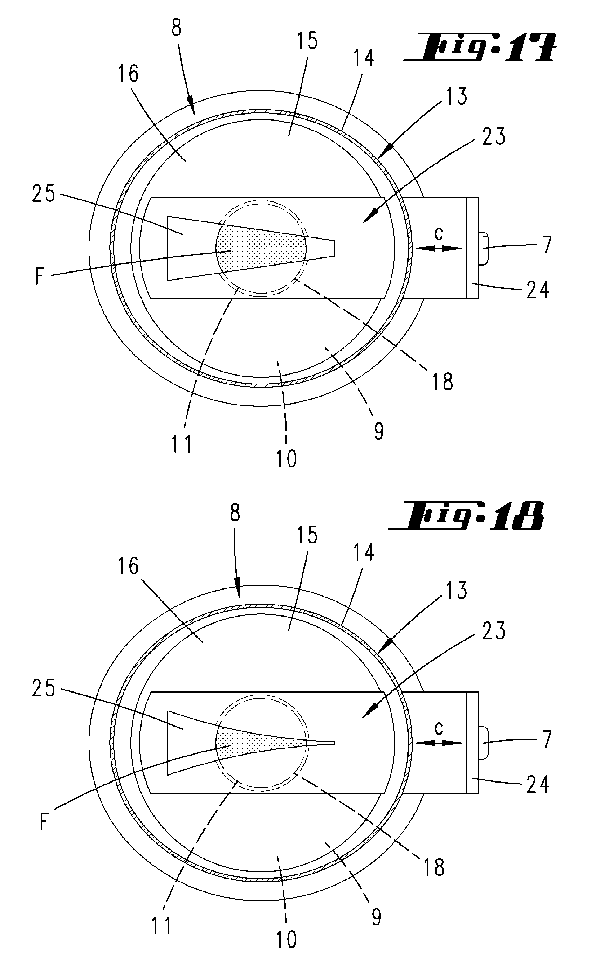

Die Schieberblende 23 weist gemäß der Ausführungsform in Fig. 17 eine insgesamt etwa keilförmige Schieberöffnung 25 auf, die zumindest teilweise in vertikaler Überdeckung bringbar ist insbesondere zu dem Dampfdurchlass 11 des Deckels 8. Durch lineare Schiebeverlagerung der Schieberblende 23 gemäß dem Doppelpfeil c in Fig. 17 ist eine lineare Beeinflussung der freien Dampfdurchtritts-Öffnungsfläche F erreichbar.

Fig. 18 zeigt eine Weiterbildung der Ausführungsform gemäß Fig. 17, bei welcher die in Schieberichtung c ausgerichteten Flanken der Schieberöffnung 25 gekrümmt aufeinander zu verlaufen, wodurch eine nicht-lineare Beeinflussung des Dampfstromes und somit eine entsprechend nicht-lineare Veränderung der freien Dampfdurchtritts-Öffnungsfläche F in Abhängigkeit von der Schieberstellung erreichbar ist.

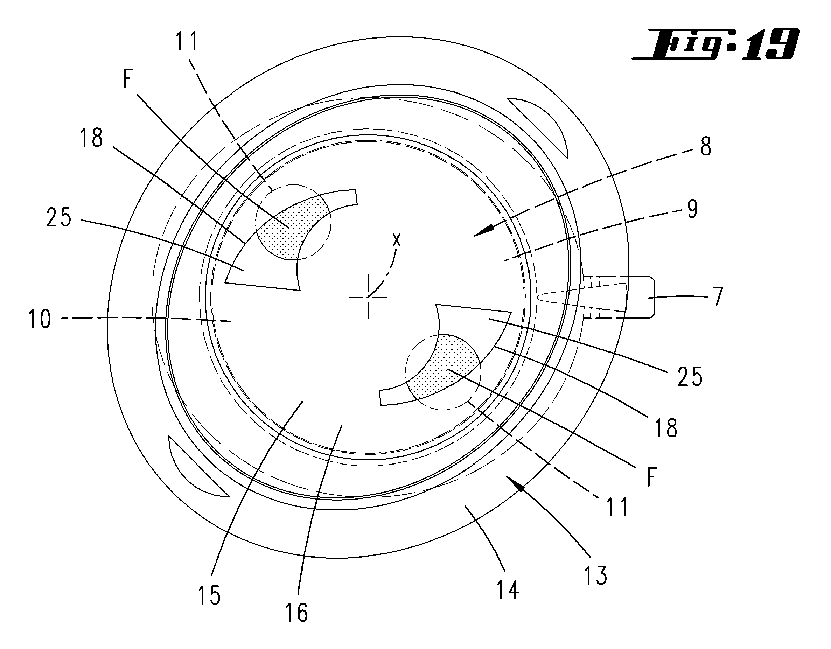

Fig. 19 zeigt eine Ausführungsform , bei welcher eine rotatorisch wirkende Schieberlösung vorgesehen ist. Die Schieberblende wird hierbei bevorzugt durch das Aufsatzteil 13, insbesondere durch das Obergefäß 14 gebildet, welches im Bereich des Auflagebodens 16 in dem dargestellten Ausführungsbeispiel bevorzugt diametral gegenüberliegend angeordnete Dampfdurchtrittsöffnungen 18 aufweist. Während diese Dampfdurchtrittsöffnungen 18 langgestreckt in Umfangsrichtung sich erweiternd, annähernd sichelartig ausgebildet sind, sind die bevorzugt gleichfalls diametral gegenüberliegend in der Deckelwand 10 ausgebildeten Dampfdurchlässe 11 kreisrund gebildet.

Zufolge unterschiedlicher Umfangsausrichtungen des Obergefäßes 14 relativ zu dem Deckel 8 und entsprechender Zuordnung unterschiedlich breiter (in radialer Richtung betrachtet) Bereiche der Dampfdurchtrittsöffnungen 18 zu den Dampfdurchlässen 11 ist eine Regulierung des Dampfdurchlasses infolge einer Reduzierung bzw. Erweiterung der Dampfdurchtritts-Öffnungsfläche F erreichbar, dies ggf. bis hin zu einem vollständigen Verschluss und entsprechender Unterbindung des Dampfdurchtrittes. Auch hierbei ist bevorzugt eine nicht-lineare Beeinflussung des Dampfdurchlasses gegeben.

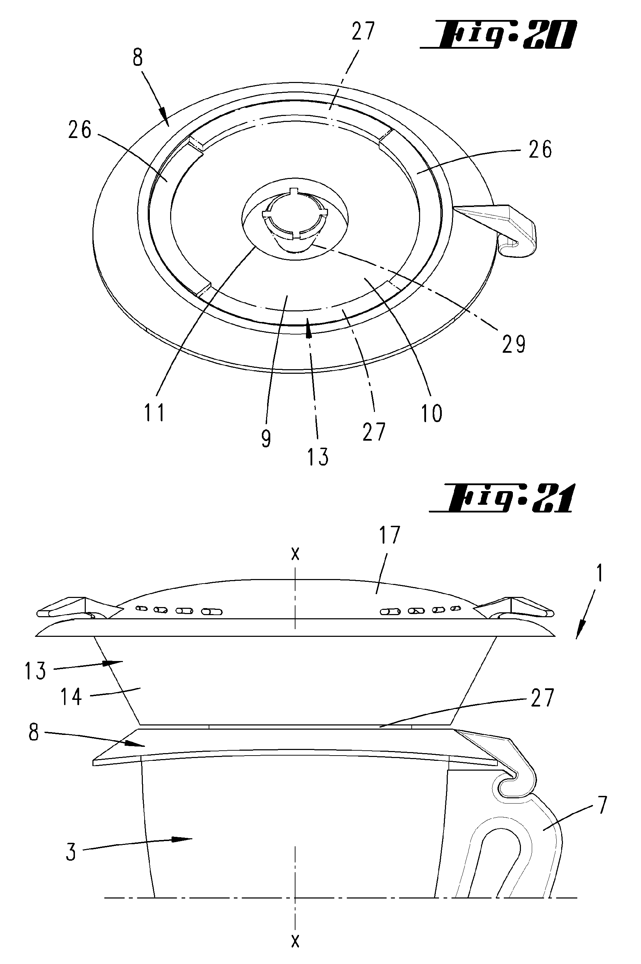

Eine weiter bevorzugte Ausgestaltung sieht vor, den Dampfdurchtritt zufolge Änderung des vertikalen Abstandes zwischen Gargut-Auflageboden 16 und Aufstandsfläche 9 des Deckels 8 zu verändern. Hierzu ist gemäß der Ausführungsform in den Fig. 20 bis 22 auf der Aufstandsfläche 9 des Deckels 8 eine schiefe Ebene vorgesehen. Diese ist gebildet bevorzugt durch zwei diametral gegenüberliegende Rampen 26, welche in derselben Umfangsrichtung ausgehend von der Aufstandsfläche 9 ansteigen.

Diese Rampen 26 wirken unmittelbar mit der Unterseite des Auflagebodens 16 zusammen, bevorzugt mit entsprechenden Negativrampen. Weiter bevorzugt wirken die Rampen 26 mit, bevorzugt eine ebene Abstützfläche bildenden, im Grundriss kreisringabschnittförmigen Abstützwandungen 27 zusammen, welche unterseitig des Auflagebodens 16 an diesem angeordnet sind.

Stützt sich das Obergefäß 14 über die Abstützwandungen 27 auf der Aufstandsfläche 9 des Deckels 8 ab, so ist bevorzugt eine vertikal unterste Stellung der Anordnung erreicht, in welcher bevorzugt ein maximaler Dampfdurchlass aus dem Gargefäß 3 in das Obergefäß 14 erreicht ist, wobei die Abstützwandungen 27 und bevorzugt auch die Rampen 26 einen Übergangsraum zwischen Deckel 8 und Auflageboden 16 umschließen.

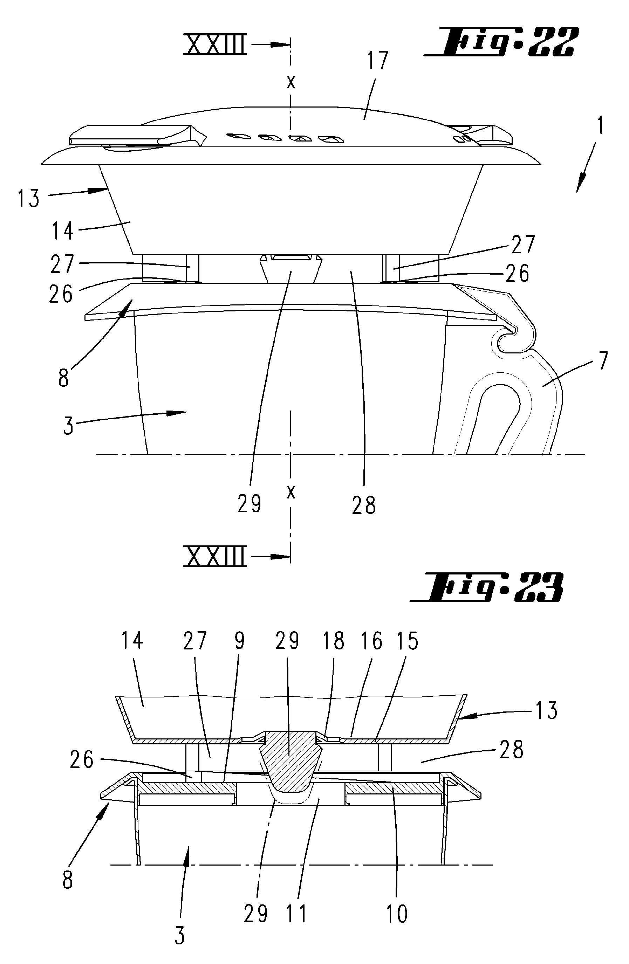

Mit umfangsversetzter Anordnung des Obergefäßes 14 relativ zum Deckel 8 und damit einhergehendem Abstützen der Abstützwandungen 27, bzw. an diesen angeformten Negativrampen, auf den Rampen 26 ist eine zumindest vergrößerte vertikale Beabstandung des Auflagebodens 16 gegenüber der Aufstandsfläche 9 (im Vergleich zu der vertikal untersten Stellung) erreicht, in welcher vertikal beabstandeten Stellung bevorzugt zugleich sich in Umfangsrichtung zwischen den Abstützwandungen 27 ausgebildete Radial-Austrittsöffnungen 28 ergeben (vgl. Fig. 22). Der aus dem bevorzugt zentral in der Deckelwand 10 vorgesehenen Dampfdurchlass 11 aus dem Gargefäß 3 austretende Dampf entweicht zum Teil durch die entstehenden seitlichen Austrittsöffnungen 28 in die Umgebung, bevor dieser das Obergefäß 14 nach Durchtritt durch eine entsprechend vorgesehene Dampfdurchtrittsöffnung 18 erreicht. Der Teil des Dampfes, der frei nach außen durch die Austrittsöffnungen 28 in die Umgebung entweicht, steht somit nicht mehr für den Garprozess zur Verfügung.

Alternativ oder auch ergänzend zu der in den Fig. 20 bis 22 dargestellten Ausführungsform ist an dem Aufsatzteil 13 unterseitig ein nach unten ragender keilartiger Vorsprung 29 vorgesehen. Dieser ragt zumindest in einer relativen Vertikalstellung des Auflagebodens 16 zur Aufstandsfläche 9 des Deckels 8 in den Dampfdurchlass 11 des Deckels 8 ein, womit in Abhängigkeit von einer Vertikalstellung und entsprechender Vertikalpositionierung des Vorsprunges 29 eine Regulierung der freien Dampfdurchtritts-Öffnungsfläche F im Bereich des Dampfdurchlasses 11 erreichbar ist, wobei bevorzugt der Vorsprung 29 hinsichtlich seines maximalen Durchmessers so gewählt ist, dass in keiner Vertikalstellung desselben ein vollständiger Verschluss des Dampfdurchlasses 11 erreichbar ist. Es verbleibt bevorzugt stets eine den Vorsprung 29 zumindest in einer vertikalen Projektion umgebende kreisringförmige Dampfdurchtritts-Öffnungsfläche F, deren radiales Erstreckungsmaß in Abhängigkeit von der vertikalen Stellung des Vorsprunges 29 regulierbar ist.

Die Regulierung des Dampfdurchlasses insbesondere infolge unterschiedlicher Umfangsausrichtungen des Aufsatzteiles 13 relativ zu dem Deckel 8 ist auch ohne Festlegungsmittel, wie die beschriebenen Magnete, durchführbar. Es ergibt sich hierbei bevorzugt eine stufenlose Regulierung der Dampfdurchtritts-Öffnungsfläche F. Gegebenenfalls weiterhin vorgesehene Magnete dienen in diesem Zusammenhang bevorzugt lediglich der Markierung von Anfangs- und End-(oder Zwischen-)Positionen. Weiterhin ist vorgesehen, durch den Einsatz von Magneten und bspw. "Reed"-Kontakten durch Verdrehen des Obergefäßes 14 relativ zu dem Deckel 8 eine Ansteuerung der Heizung durchzuführen, wobei bevorzugt in Abhängigkeit von der Drehposition des Aufsatzteiles 13 bzw. Obergefäßes 14 die Heiztemperatur bevorzugt selbsttätig durch eine entsprechend vorgesehene Software einstellbar ist.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildungen des Standes der Technik, insbesondere um auf Basis dieser Ansprüche Teilanmeldungen vorzunehmen.

### Bezugszeichenliste:

- 1: Küchenmaschine
- 2: Gehäuse
- 3: Gargefäß
- 4: Gefäßaufnahme
- 5: Elektromotor
- 6: Rührwerk
- 7: Handgriff
- 8: Deckel
- 9: Aufstandsfläche
- 10: Deckelwand
- 11: Dampfdurchlass
- 12: Temperatursteller
- 13: Aufsatzteil
- 14: Obergefäß
- 15: Trennwand
- 16: Gargut-Auflageboden
- 17: Obergefäßdeckel
- 18: Dampfdurchtrittsöffnung
- 19: Magnet
- 20: Magnet
- 21: Metallplatte
- 22: Read-Kontakt
- 23: Schieberblende
- 24: Greifteil
- 25: Schieberöffnung
- 26: Rampe
- 27: Abstützwandung
- 28: Radial-Austrittsöffnung
- 29: Vorsprung

- a: Kreislinie
- b: Kreislinie
- c: Schieberichtung
- x: Achse

- F: Dampfdurchtritts-Öffnungsfläche

## Patentansprüche

1. Verfahren zum Zubereiten von Speisen in einem Gargefäß (3), auf dem ein gesondertes Obergefäß (14) vorgesehen ist, wobei das Obergefäß (14) nach unten durch einen bevorzugt dampfdurchlässigen, eine Trennwand (15) ausbildenden Gargut-Auflageboden (16) begrenzt ist, **dadurch gekennzeichnet, dass** zur Beeinflussung eines Garvorganges in dem Obergefäß (14) der Dampfdurchlass (11) unterschiedlich eingestellt wird.

2. Verfahren nach Anspruch 1 oder insbesondere danach, **dadurch gekennzeichnet, dass** der Dampfdurchlass (11) durch eine in dem Gargut-Auflageboden (16) ausgebildete Blende einstellbar ist.

3. Zusammenfassung von einem Gargefäß (3) mit einem Obergefäß (14), wobei das Gargefäß (3) und das Obergefäß (14) durch eine dampfdurchlässige Trennwand (15) voneinander gesondert sind, **dadurch gekennzeichnet, dass** der Dampfdurchlass (11) einstellbar ist.

4. Zusammenfassung nach Anspruch 3 oder insbesondere danach, **dadurch gekennzeichnet, dass** das Gargefäß (3) einen Deckel (8) aufweist und ein das Obergefäß (14) nach unten begrenzender Gargut-Auflageboden (16) die Trennwand (15), wobei in dem Deckel (8) ein Dampfdurchlass (11) vorgesehen ist, wobei weiter durch unterschiedliche Umfangsstellungen von Obergefäß (14) und Deckel (8) zueinander der unterschiedliche Dampfdurchlass (11) einstellbar ist.

5. Zusammenfassung nach einem oder mehreren der vorhergehenden Ansprüche 3 bis 4 oder insbesondere danach, **dadurch gekennzeichnet, dass** der Deckel (8) und der Auflageboden (16) miteinander teilweise in Überdeckung befindliche, unrunde Öffnungen aufweisen.

6. Zusammenfassung nach einem oder mehreren der vorhergehenden Ansprüche 3 bis 5 oder insbesondere danach, **dadurch gekennzeichnet, dass** der Deckel (8) und der Auflageboden (16) Öffnungen aufweisen, die in unterschiedlichem Überdeckungsgrad zueinander anordbar sind.

7. Zusammenfassung nach einem oder mehreren der vorhergehenden Ansprüche 3 bis 6 oder insbesondere danach, **dadurch gekennzeichnet, dass** der Abstand zwischen dem Auflageboden (16) und der Oberseite des Deckels (8) einstellbar ist.

8. Zusammenfassung nach einem oder mehreren der vorhergehenden Ansprüche 3 bis 7 oder insbesondere danach, **dadurch gekennzeichnet, dass** im Zuge der Änderung des vertikalen Abstandes eine Dampfdurchtrittsöffnung hinsichtlich ihrer Dampfdurchlässigkeit veränderbar ist.

9. Zusammenfassung nach einem oder mehreren der vorhergehenden Ansprüche 3 bis 8 oder insbesondere danach, **dadurch gekennzeichnet, dass** an dem Auflageboden (16) nach unten ragend oder an dem Deckel (8) des Gargefäßes (3) nach oben abstehend ein vorzugsweise keilartiger Vorsprung (29) vorgesehen ist, der in eine an dem Deckel (8) oder an dem Auflageboden (16) ausgebildete Durchtrittsöffnung einragt.
